# EUROPÄISCHE PATENTSCHRIFT

(11) **EP 1 592 585 B1**
(45) Veröffentlichungstag und Bekanntmachung des Hinweises auf die Patenterteilung: **20.12.2006**
(21) Anmeldenummer: 04704539.8
(22) Anmeldetag: 23.01.2004
(51) Int. Cl.: B60R 21/16

(54) **INSASSENSCHUTZEINRICHTUNG**
PASSENGER PROTECTION DEVICE
DISPOSITIF DE PROTECTION DES OCCUPANTS D'UN VEHICULE

(30) Priorität: 10.02.2003 DE 10306343
(43) Veröffentlichungstag der Anmeldung: 09.11.2005
(73) Patentinhaber: TAKATA CORPORATION, Minato-ku, Tokyo 106-8510 (JP)
(72) Erfinder: KARLBAUER, Ulrich, 89079 Ulm (DE); BREUNINGER, Martin, 89233 Neu-Ulm (DE); WEYRICH, Christian, 89231 Neu-Ulm (DE)
(74) Vertreter: Baumgärtel, Gunnar
(86) Internationale Anmeldenummer: PCT/DE2004/000131
(87) Internationale Veröffentlichungsnummer: WO 2004/069609

(56) Entgegenhaltungen:
- EP-A- 0 814 001
- WO-A-03/059700
- DE-U- 29 724 502
- GB-A- 2 327 066
- US-A- 5 588 672
- US-A1- 2002 024 204
- US-A1- 2002 167 153
- US-B1- 6 176 513

## Beschreibung

Die Erfindung bezieht sich auf einen Gassack für eine Insassenschutzeinrichtung.

Bekanntermaßen werden Insassenschutzeinrichtungen mit Gassäcken (Airbags) seit Jahren in Kraftfahrzeugen eingesetzt. Es ist darüber hinaus bekannt, Gassäcke mit Fangbändern an der Karosserie zu befestigen, um eine vorgegebene Positionierung der Gassäcke relativ zur Karosserie zu erreichen (DE 101 29 581 A1, DE 101 26 322, DE 100 21 577).

Die beiden Schriften EP 0 814 001 und US 2002/0024204 beschreiben jeweils Gassäcke für Insassenschutzeinrichtungen mit den Merkmalen gemäß dem Oberbegriff des Anspruchs 1.

Der Erfindung liegt die Aufgabe zugrunde, einen Gassack für eine Insassenschutzeinrichtung anzugeben, der optimalen Schutz für einen Fahrzeuginsassen bietet und dennoch mit möglichst geringem Materialaufwand und damit kostengünstig herstellbar ist.

Diese Aufgabe wird erfindungsgemäß durch einen Gassack mit den Merkmalen gemäß Patentanspruch 1 gelöst. Vorteilhafte Ausgestaltungen des erfindungsgemäßen Gassacks sind in Unteransprüchen angegeben.

Ein wesentlicher Vorteil des erfindungsgemäßen Gassacks ist darin zu sehen, dass sich dieser - bei minimalem Materialbedarf - auch in "Problemzonen" des Kraftfahrzeugs einsetzen lässt; dies soll nun am Beispiel eines Gassacks erläutert werden, der eine vordere Seitenscheibe und damit den Bereich der vorderen Fahrzeugsäule (A-Säule) des Kraftfahrzeugs abdecken soll; die nachfolgenden Ausführungen sind selbstverständlich auch für die hintere Fahrzeugsäule (C-Säule bzw. D-Säule) und die hinteren Seitenfenster entsprechend gültig:
Im Bereich der A-Säule besteht grundsätzlich das Problem, dass die gekrümmt verlaufende obere "Fenstersehne" - als obere "Fenstersehne" wird nachfolgend die aus der Fensteroberkante und der vorderen Fensterseitenkante bestehende obere Gesamtkante des Fensters bezeichnet - länger als die dazugehörige Fensterunterkante ist. Wenn nun der Gassack zum Schutz eines Fahrzeuginsassen die gesamte
Fensterscheibe abdecken soll, könnte die Unterkante des Gassacks folglich kürzer als die am oberen Dachholm und der A-Säule befestigte Oberkante des Gassacks sein. Ein solcher - materialsparender - Zuschnitt des Gassackmaterials ist aber nicht möglich, weil sich der Gassack dann nicht in seinen, im Bereich des Dachholms und der vorderen A-Säule befindlichen Aufnahmebereich (Gassackmodul bzw. Aufnahmebehälter oder Aufnahmeschlauch) falten lässt; denn die Gassackunterkante ist schlicht zu kurz. Um den Gassack in den Aufnahmebereich falten zu können, muss ein einteiliger Gassack mit einem am Dachholm und der A-Säule angeordneten Aufnahmebereich an der Unterkante des Gassacks stets mit Übermaß zugeschnitten sein. Mit anderen Worten: Die Unterkante des Gassacks muss bei einem einteiligen Gassack mit einem am Dachholm und der A-Säule angeordneten Aufnahmebereich mindestens so lang sein wie die obere "Fenstersehne", um das Hineinfalten in den Aufnahmebereich zu ermöglichen; eine solche Überlänge hat jedoch einen unnötig hohen Materialverbrauch zur Folge. Eine "Überlänge" der Unterkante des Gassacks hat noch einen weiteren wesentlichen Nachteil; denn aufgrund des überschüssigen Gassacksmaterials ist der Gassack im Bereich seiner Unterkante sehr flexibel bzw. ohne "innere Spannung", so dass der untere Bereich des Gassacks im Falle eines Unfalls Querkräfte kaum aufnehmen kann und sogar aus dem Seitenfenster herausschwenken kann. Um dies zu verhindern, müsste der einteilige Gassack im Bereich der unteren Gassackkante - also nahe der unteren Fensterberandung - an der Karosserie abgespannt werden.

Diese Probleme - unnötiger Materialverbrauch und Erfordernis des Abspannens des Gassacks an der Karosserie - treten bei dem erfindungsgemäßen Gassack nicht auf, weil der erfindungsgemäße Gassack in mindestens zwei Teilgassäcke segmentiert ist. Durch diese Segmentierung lässt sich ein Teilgassack beispielsweise an die Länge der Fensteroberkante (bzw. des Dachholms) und der andere Teilgassack an die Länge der vorderen Fensterseitenkante (bzw. A-Säule) anpassen, so dass ein "Überschnitt" des Gassackmaterials überflüssig ist.

Ein weiterer wesentlicher Vorteil der Erfindung besteht darin, dass der erfindungsgemäße - mehrteilige - Gassack aufgrund der die Teilgassäcke verbindenden Spanneinrichtung quasi dieselbe innere Stabilität und Spannung aufweist, wie dies bei einem einteiligen Gassack der Fall ist; denn aufgrund der Spanneinrichtung können sich die Teilgassäcke untereinander nicht bzw. nur unwesentlich relativ zueinander bewegen, so dass ein Abspannen des Gassackes an der Karosserie nicht unbedingt erforderlich ist.

Zusammengefasst ist der erfindungsgemäße Gassack aufgrund seiner Segmentierung in Teilgassäcke in "Problemzonen" materialsparender als ein einteiliger Gassack, ohne dass eine Einbuße an innerer Stabilität und Spannung auftritt und ohne dass eine weitere Abspannung erforderlich ist.

Erfindungsgemäß weist die Spanneinrichtung außerdem ein Spannseil auf, dessen eines Seilende im Verbindungsbereich zwischen den beiden Teilgassäcken am Gassack befestigt ist und dessen anderes Seilende an einem dem Verbindungsbereich abgewandten Ende eines der beiden Teilgassäcke befestigt ist, wobei der jeweils andere Teilgassack mittelbar oder unmittelbar mit dem Spannseil in Verbindung steht.

Die Befestigung des Spannseils an dem anderen Teilgassack kann dabei bevorzugt durch eine Führung gebildet sein, durch die das Spannseil hindurchgezogen ist.
Besonders einfach und damit vorteilhaft lässt sich eine solche Führung durch eine gasdichte Öffnung im anderen Teilgassack bilden.

Alternativ kann die Führung in dem anderen Teilgassack auch durch eine Schlaufe gebildet sein, die an dem anderen Teilgassack unmittelbar oder mittelbar befestigt ist.

Wie bereits oben ausgeführt wurde, ist der erfindungsgemäße Gassack vorteilhaft in "Problemzonen" des Kraftfahrzeugs einsetzbar; da Problemzonen beispielsweise die vorderen und hinteren Säulen des Kraftfahrzeugs sind, wird es als vorteilhaft angesehen, wenn der Gassack ein Head-Side-Airbag ist, der im Bereich der A-Säule und/oder der C-Säule (bzw. D-Säule) eingesetzt wird.

Im Falle eines Head-Side-Airbags kann der eine Teilgassack vorzugsweise - im unaufgeblasenen Zustand - im Bereich der vorderen oder hinteren Fahrzeugsäule und der andere Teilgassack im Bereich des Dachholms des Kraftfahrzeugs (unmittelbar oder mittelbar) befestigt sein, um eine optimale Abdeckung der Seitenfenster bzw. der gesamten Fahrzeugsseite mit dem Gassack und damit einen optimalen Schutz für einen Fahrzeuginsassen zu erreichen. Vorzugsweise erstreckt sich - im aufgeblasenen Zustand - der eine Teilgassack im wesentlichen parallel entlang der vorderen (oder hinteren) Fahrzeugsäule und der andere Teilgassack im wesentlichen senkrecht vom Dachholm nach unten.

Um eine Abdeckung der gesamten Fahrzeugseite zu erreichen, sollte der Gassack bevorzugt mindestens drei Teilgassäcke aufweisen, von denen ein erster Teilgassack im Bereich der vorderen Fahrzeugsäule, ein zweiter Teilgassack im Bereich des Dachholms des Kraftfahrzeugs und ein dritter Teilgassack im Bereich der hinteren Fahrzeugsäule befestigt ist. Bei einem solchen Teilgassack werden sowohl die vordere, im Bereich der A-Säule angeordnete "Problemzone" als auch die hintere, im Bereich der C-Säule angeordnete "Problemzone" des Kraftfahrzeugs mit einem einzigen dreigeteilten Gassack abgedeckt.

Bei einem Gassack mit drei Teilgassäcken sollten zumindest zwei Spanneinrichtungen vorhanden sein, von denen eine erste im vorderen Kraftfahrzeugbereich den ersten und den zweiten Teilgassack miteinander verspannt und von denen die zweite Spanneinrichtung den zweiten und den dritten Teilgassack miteinander verspannt. Mit Hilfe der zwei Spanneinrichtungen wird eine optimale Verbindung der drei Teilgassäcke miteinander und damit eine optimale Verspannung und Positionierung der Teilgassäcke erreicht.

Eine Abdeckung der gesamten Fahrzeugseite kann darüber hinaus erreicht werden, wenn der Gassack zwei Teilgassäcke aufweist, die durch eine Spanneinrichtung im mittleren Bereich das Gassackes miteinander verspannt werden. Bevorzugt ist der mittlere Bereich des Gassacks im Bereich einer mittleren Fahrzeugsäule, insbesondere der B-Säule, des Kraftfahrzeugs angeordnet. Befindet sich die Spanneinrichtung im Bereich einer oberen Gurtumlenkung des Kraftfahrzeugs, so lässt sich einfach und damit vorteilhaft gewährleisten, dass die Gurteinrichtung, insbesondere die obere Gurtumlenkung, das Entfalten des Gassacks im Falle eines Unfalls nicht behindert.

Bevorzugt wird die Spanneinrichtung bzw. werden die Spanneinrichtungen an Stellen des Gassackes angeordnet, an denen kein Schutzpotential bereitgestellt werden muss.

Da im Bereich der Spanneinrichtungen kein schützender, mit Gas gefüllter Gassack zur Verfügung steht, der ein Herausschleudern von Körperteilen oder ein Herausfallen von Gegenständen aus einem Seitenfenster des Kraftfahrzeugs wirkungsvoll verhindern könnte, wird es als vorteilhaft angesehen, wenn der Gassack im Bereich mindestens einer der Spanneinrichtungen ein Gewebesegel aufweist. Das Gewebesegel soll dabei ein durch die zugeordnete Spanneinrichtung gebildetes "Fenster" - also eine "Schutzlücke" - im Gassackbereich abdecken.

Vorzugsweise ist das Gewebesegel im wesentlichen dreieckförmig und/oder durch die zugeordnete Spanneinrichtung abgespannt.

Darüber hinaus wird es als vorteilhaft angesehen, wenn der Gassack weitere Gewebesegel aufweist; vorzugsweise sind die weiteren Gewebesegel an Stellen angeordnet, an denen keine "Gasfüllung" zum Schutz des Fahrzeuginsassen erforderlich ist und lediglich ein Abschirmen des Fensterbereichs erfolgen soll, um beispielsweise ein "Heraustreten" bzw. "Herausschleudern" von Körperteilen zu vermeiden.

Im Übrigen weist der Gassack vorzugsweise abstützende Elemente an mindestens einer Fensterunterkante der Seitenfenster des Kraftfahrzeugs auf, die im Falle eines Unfalls ein Durchbiegen in den Seitenfensterbereich hinein verhindern.

Da der obere Bereich der "Fenstersehnen" bei einem Unfall nicht unbedingt abgedeckt sein muss, sollten die "Fenstersehnen" aus Gründen der Materialersparnis und aus Gründen eines besseren Abspannens des Gassacks zumindest teilweise offen bzw. gassackfrei bleiben.

Zur Erläuterung der Erfindung zeigen:
- Figur 1: ein Ausführungsbeispiel für einen erfindungsgemäßen Gassack im unaufgeblasenen Zustand vor der Montage in einem Kraftfahrzeug,
- Figur 2: den Gassack gemäß Figur 1 nach einer Montage im Kraftfahrzeug im teilweise aufgeblasenen Zustand,
- Figur 3: den Gassack gemäß Figuren 1 und 2 im vollständig aufgeblasenen Zustand,
- Figur 4: ein zweites Ausführungsbeispiel für einen erfindungsgemäßen Gassack vor dem Zusammenlegen der Gassackhülle,
- Figur 5: den Gassack gemäß der Figur 4 im zusammengelegten Zustand vor der Montage im Kraftfahrzeug,
- Figur 6: den Gassack gemäß den Figuren 4 und 5 bei der' Montage im Kraftfahrzeug,
- Figur 7: den Gassack gemäß Figur 6 im aufgeblasenen Zustand,
- Figur 8: ein drittes Ausführungsbeispiel für einen erfindungsgemäßen Gassack mit einem Gewebesegel (vor dem Zusammenlegen der Gassackhülle),
- Figur 9: den Gassack gemäß Figur 8 nach der Montage im Kraftfahrzeug und
- Figur 10: den Gassack gemäß der Figur 9 im entfalteten Zustand.

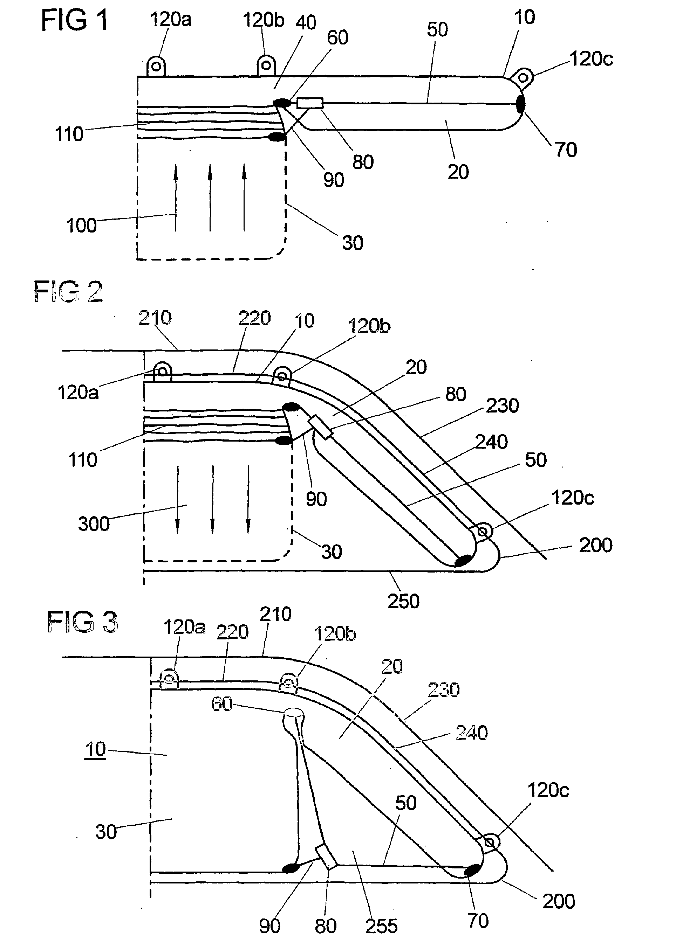

Die Figur 1 zeigt einen Gassack 10 (Head-Side-Airbag) im unaufgeblasenen Zustand. Der Gassack 10 weist einen Teilgassack 20 (erster Teilgassack) und einen anderen Teilgassack 30 (zweiter Teilgassack) auf. In einem Verbindungsbereich 40 sind die beiden Teilgassäcke 20 und 30 miteinander verbunden und stehen in einer Strömungsverbindung.

An dem ersten Teilgassack 20 ist ein Spannseil 50 befestigt; dabei ist ein Seilende 60 des Spannseils 50 im Verbindungsbereich 40 zwischen den beiden Teilgassäcken 20 und 30 am Gassack 10 beispielsweise angenäht oder angeklebt. Das andere Seilende 70 des Spannseils 50 ist an dem dem Verbindungsbereich 40 abgewandten Ende des ersten Teilgassacks 20 befestigt.

Das Spannseil 50 ist durch eine Schlaufe 80 hindurchgezogen, die mittels eines Verbindungsseils 90 mit dem zweiten Teilgassack 30 in Verbindung steht. Das Verbindungsseil 90 ist an dem dem Verbindungsbereich 40 abgewandten Ende des zweiten Teilgassacks 30 angebracht.

In der Figur 1 ist erkennbar, dass der zweite Teilgassack 30 teilweise zusammengelegt ist. Die Pfeile 100 deuten an, dass der zweite Teilgassack 30 beispielsweise zickzackgefaltet unter Bildung eines Teilgassackpakets 110 zusammengelegt wurde. Der Gassack 10 ist mit Befestigungsschlaufen 120a, 120b, 120c ausgestattet, mit denen sich der Gassack an der Fahrzeugkarosserie befestigen lässt.

In der Figur 2 erkennt man den Gassack 10 gemäß der Figur 1 im montieren Zustand in einem Kraftfahrzeug. Das Bezugszeichen 200 kennzeichnet dabei die vordere Seitenscheibe des Kraftfahrzeugs. Die Fensterscheibe 200 weist eine obere, gekrümmt verlaufende "Fenstersehne" auf, die sich aus der an den oberen Dachholm 210 angrenzenden Fensteroberkante 220 und aus der an die A-Säule 230 angrenzenden vorderen Fensterseitenkante 240 zusammensetzt. Die obere Fenstersehne grenzt an die untere Fensterunterkante 250 an, die im wesentlichen horizontal verläuft.

Man erkennt in der Figur 2 außerdem, dass die Fenstersehne deutlich länger als die Fensterunterkante 250 ist. Würde nun versucht werden, einen einteiligen Gassack in einem Aufnahmeraum (Gassackmodul bzw. Aufnahmebehälter oder Aufnahmeschlauch) unterzubringen, der im Bereich des Dachholms 210 und der A-Säule 230 angebracht ist, so müsste die Unterkante des Gassacks deutlich länger sein als die Fensterunterkante 250; andernfalls wäre die Gassackunterkante zu kurz. Um bei einem einteiligen Gassack ein Hineinfallen in den Aufnahmeraum zu ermöglichen, muss also die Unterkante des Gassacks 10 eine deutliche Überlänge aufweisen und mindestens so lang sein wie die Länge der "Fenstersehne". Wie bereits eingangs erläutert wurde, müsste die Unterkante des Gassacks gestrafft werden - z. B. durch Abspannung mit der Karosserie - , um die erforderliche innere Stabilität und Spannung des Gassackes zu erreichen.

Bei dem Ausführungsbeispiel gemäß der Figur 2 wird dieses Problem anders gelöst; denn der Gassack 10 ist in die beiden Teilgassäcke 20 und 30 segmentiert. Der erste Teilgassack 20 ist dabei quasi entlang der gesamten A-Säule 230 unmittelbar an der Fahrzeugkarosserie befestigt, , und zwar mittels der beiden Befestigungsschlaufen 120b und 120c. Der zweite Teilgassack 30 ist mit seiner Oberkante mittels der beiden Befestigungsschlaufen 120a und 120b unmittelbar am Dachholm 210 angebracht. Selbstverständlich können auch mehr als drei Befestigungsschlaufen zur Befestigung des Gassacks 10 eingesetzt werden.

In der Figur 2 ist dabei der erste Teilgassack 20 im bereits aufgeblasenen Zustand und der zweite Teilgassack 30 im noch nicht aufgeblasenen Zustand dargestellt. Pfeile 300 deuten die Aufblasrichtung des zweiten Teilgassacks bzw. des Teilgassackpakets 110 an. Beispielsweise kann der Gassack 10 so aufgeblasen werden, dass sich der erste Teilgassack 20 - im wesentlichen - zuerst entfaltet und der zweite Teilgassack 30 erst nachfolgend aufgeblasen wird.

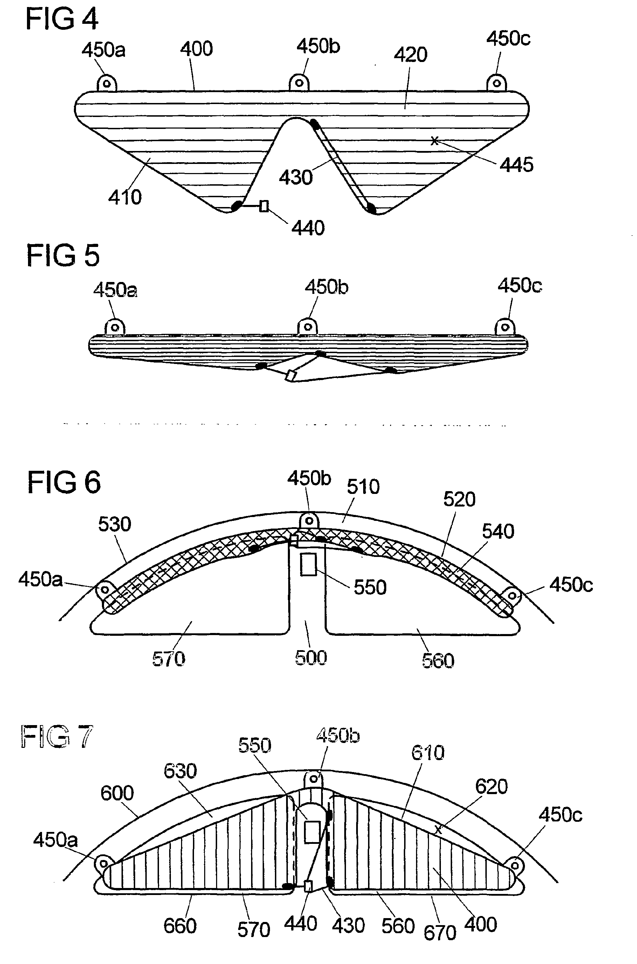

Beim Aufblasen des Teilgassackpakets 110 bewegt sich die Schlaufe 80 entlang des Spannseils 50 nach unten und zieht dabei die beiden Teilgassäcke 20 und 30 zueinander, wodurch die beiden Teilgassäcke 20 und 30 miteinander verspannt werden. Der endgültig aufgeblasene Gassack 10 ist im verspannten Zustand in der Figur 3 dargestellt. Man erkennt, dass der erste Teilgassack 20 im Bereich der A-Säule 230 des Kraftfahrzeugs befestigt und durch das Spannseil 50 mit dem zweiten Teilgassack 30 verspannt ist. Der zweite Teilgassack 30 ist im Bereich seines oberen Endes mit dem Dachholm 210 verbunden und im Bereich seines unteren Endes über das Verbindungsseil 90 und die Schlaufe 80 mit dem Spannseil 50 und dem ersten Teilgassack 20 verspannt.

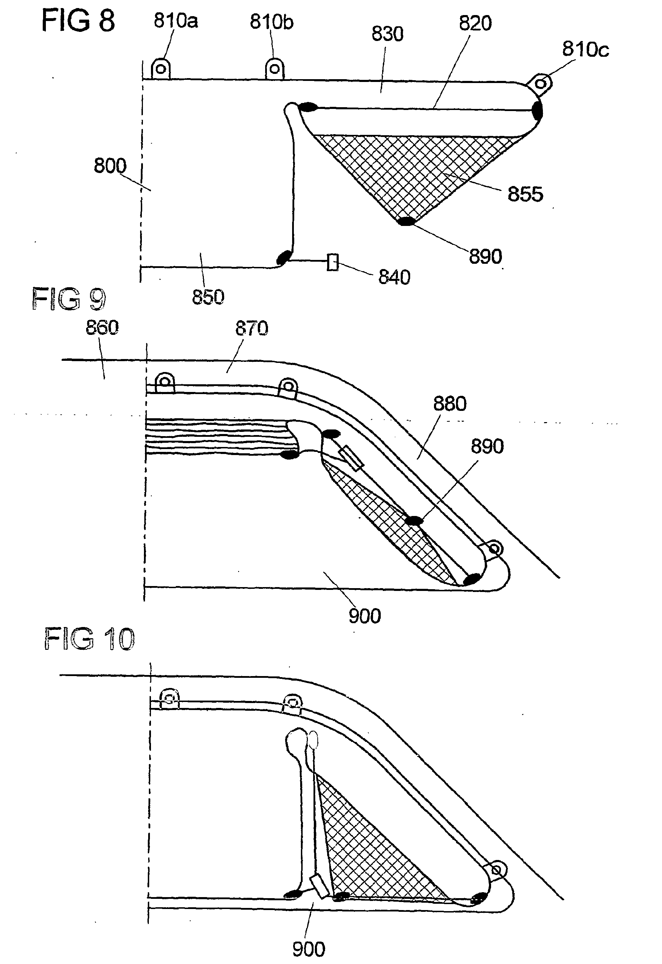

Man erkennt in der Figur 3 außerdem, dass im Bereich des Spannseils 50 und der Schlaufe 80 ein "Fenster" 255 im Gassack 10 gebildet ist; dieses "Fenster" könnte beispielsweise mit einem Gewebesegel abgedeckt bzw. verschlossen sein (vgl. drittes Ausführungsbeispiel gemäß den Figuren 8 bis 10).

Zusammenfassend lässt sich somit feststellen, dass aufgrund der Segmentierung des Gassacks 10 in die beiden Teilgassäcke 20 und 30 eine optimale Abdeckung der Fensterscheibe 200 bei maximaler Gassackabspannung und bei minimalem Gassackmaterialbedarf erreicht wird; denn eine Überlänge des Gassacks 10 im Bereich der unteren Fensterkante 250 ist bei dem Gassack 10 aufgrund der Segmentierung des Gassacks in die zwei Teilgassäcke 20 und 30 nicht erforderlich. Darüber hinaus wird aufgrund der durch das Spannseil 50, die Schlaufe 80 und das Verbindungsseil 90 gebildeten "inneren" Spanneinrichtung der Gassack 10 im Wesentlichen im Bereich der unteren Gassackkante abgespannt und biegesteif gezogen.

Der Vollständigkeit halber sei darauf hingewiesen, dass der Gassack 10 nicht nur im Bereich der vorderen A-Säule des Kraftfahrzeugs, sondern auch im Bereich der hinteren Säule des Kraftfahrzeugs (C-/D-Säule) entsprechend segmentiert sein kann und entsprechende Teilgassäcke aufweisen kann. So kann der Gassack 10 beispielsweise drei Teilgassäcke aufweisen, von denen einer der vorderen A-Säule und ein anderer der hinteren C-Säule zugeordnet ist. Die Teilgassäcke sind dann durch entsprechende Spanneinrichtungen miteinander zu verbinden.

Im Übrigen kann der Gassack 10 gemäß den Figuren 1 bis 3 - zusätzlich - auch mit weiteren Spanneinrichtungen an der Karosserie befestigt werden; Spanneinrichtungen zur Verspannung eines Gassacks mit der Karosserie sind beispielsweise in der eingangs genannten deutschen Offenlegungsschrift 101 29 581 beschrieben. Anstelle einer unmittelbaren Befestigung des Gassacks 10 am Dachholm 210 und/oder an der A-Säule 230 kann auch eine mittelbare Befestigung vorhanden sein, beispielsweise mittels der in der genannten Offenlegungsschrift beschriebenen "Karosserie-Verspanneinrichtungen".

In den Figuren 4 bis 6 ist ein zweites Ausführungsbeispiel für einen erfindungsgemäßen Gassack dargestellt.

Man erkennt in der Figur 4 den Gassack 400 vor dem Zusammenfalten. Der Gassack 400 weist zwei Teilgassäcke 410 und 420 auf, die durch eine Spanneinrichtung im mittleren Bereich des Gassackes 400 miteinander verspannt werden. Die Spanneinrichtung ist durch ein am Teilgassack 420 angebrachtes Spannseil 430 und eine am Teilgassack 410 angebrachte Gleitschlaufe 440 gebildet. Die Gleitschlaufe 440 ist in der Darstellung gemäß der Figur 4 noch "offen", so dass sie an dem Spannseil 430 gleitend angebracht werden kann.

Das Bezugszeichen 445 deutet in der Figur 4 Faltlinien an, entlang derer der Gassack 400 zikzak-gefaltet wird. Im Übrigen weist der Gassack 400 Befestigungsschlaufen 450a, 450b, und 450c auf, mit denen der Gassack 400 an der Fahrzeugkarosserie befestigbar ist.

In der Figur 5 ist der fertig zusammengelegte, zikzak-gefaltete Gassack 400 gezeigt. Man erkennt, dass die Gleitschlaufe 440 in das Spannseil 430 eingehängt, bzw. gleitend an diesem befestigt ist.

Die Figur 6 zeigt den Gassack 400 bei der Montage im Kraftfahrzeug. Die Befestigungsschlaufe 450b ist im Bereich der B-Säule 500 des Kraftfahrzeugs am Dachholm 510 befestigt. Die Befestigungsschlaufe 450c ist an der vorderen A-Säule 520 und die Befestigungsschlaufe 450a an der hinteren C-Säule 530 angebracht. Der Gassack 400 wird in einem "gekrümmt" verlaufenden Gassackmodul 540 untergebracht, das sich von der C-Säule 530 bis zur A-Säule 520 erstreckt.

In der Figur 7 ist der Gassack 440 im entfalteten Zustand gezeigt. Man erkennt, dass die durch das Spannseil 430 und die Schlaufe 440 gebildete Abspanneinrichtung im Bereich der B-Säule 500, und zwar im Bereich der oberen Gurtumlenkung 550 des Sicherheitsgurtes liegt.

Der Teilgassack 420 deckt das vordere Seitenfenster 560 und der Teilgassack 410 das hintere Seitenfenster 570 ab. Die Abdeckung ist jedoch nicht vollständig, sondern auf die Bereiche beschränkt, in denen die Fahrzeuginsassen geschützt werden müssen. Im Bereich der hinteren Fenstersehne 600 und im Bereich der vorderen Fenstersehne 610 gibt es frei bzw. "offen" bleibende Bereiche 620 und 630, in denen keine Gassackabdeckung vorhanden ist. Auch zwischen den Unterkanten 660 und 670 der beiden Seitenfenster 560 und 570 und der Unterkante der beiden Teilgassäcke 410 und 420 gibt es einen frei bzw. "offen" bleibenden Spalt.

In den Figuren 8 bis 10 ist ein drittes Ausführungsbeispiel für einen erfindungsgemäßen Gassack 700 dargestellt.

Die Figur 8 zeigt den Gassack 700 vor dem Zusammenlegen. Der Gassack 800 weist Befestigungsschlaufen 810a, 810b und 810c zum Befestigen des Gassacks im bzw. am Kraftfahrzeug auf. Ein Spannseil 820 ist an einem Teilgassack 830 und eine Gleitschlaufe 840 an einem Teilgassack 850 angebracht. An den Teilgassack 830 schließt sich ein Gewebesegel 855 an, das bei einem Aufblasen des Gassacks 800 nicht mit Gas gefüllt wird. Das Gewebesegel 855 soll - wie weiter unten im Zusammenhang mit der Figur 10 ersichtlich wird - verhindern, dass Körperteile oder Gegenstände bei einem Unfall aus einem Seitenfenster 900 des Kraftfahrzeugs herausgeschleudert werden.

Die Figur 9 zeigt den Gassack 400 bei der Montage im Kraftfahrzeug. Die Befestigungsschlaufe 810a ist im Bereich der B-Säule 860 des Kraftfahrzeugs am Dachholm 870 befestigt. Die Befestigungsschlaufe 810b ist im Übergangsbereich vom Dachholm zur vorderen A-Säule 880 und die Befestigungsschlaufe 810c an der vorderen A-Säule 880 angebracht. Der Gassack 800 wird in einem "gekrümmt" verlaufenden Gassackmodul untergebracht, das sich von der B-Säule 860 bis zur A-Säule 880 erstreckt.

Im Übrigen ist die Gleitschlaufe 840 in das Spannseil 820 eingehängt, bzw. gleitend an diesem befestigt. Das Gewebesegel 855 ist an einer Befestigungsstelle 890 an dem Spannseil 820 befestigt. Diese Befestigungsstelle 890 kann auch gleitend ausgeführt sein.

In der Figur 10 ist der Gassack im entfalteten Zustand gezeigt. Man erkennt, dass die durch das Spannseil 820 und die Schlaufe 840 gebildete Abspanneinrichtung die beiden Teilgassäcke 830 und 850 zusammenzieht und miteinander verspannt. Dabei wird ebenfalls das Gewebesegel 855 gespannt, so dass es eine Abdeckung bzw. eine Abschirmung des Seitenfensters 900 bewirkt und bei einem Unfall keine Körperteile etc. aus dem Seitenfenster 900 herausgeschleudert werden können. Ein "Fenster" im Gassackbereich, wie es bei dem ersten Ausführungsbeispiel gemäß der Figur 3 auftritt (vgl. Bezugszeichen 255) ist wegen des Gewebesegels 855 nicht vorhanden.

Im Übrigen kann anstelle Gleitschlaufe 840 auch eine Öse, ein Ring oder dergleichen verwendet werden; wichtig ist lediglich, dass die Reibung zwischen der Öse, dem Ring etc. und dem Spannseil 820 so gering wie möglich ist. Entsprechendes gilt für das erste und das zweite Ausführungsbeispiel gemäß den Figuren 1 bis 7.

### Bezugszeichenliste

- 10: Gassack
- 20: erster Teilgassack
- 30: zweiter Teilgassack
- 40: Verbindungsbereich
- 50: Spannseil
- 60: ein Seil Ende
- 70: anderes Seilende
- 80: Schlaufe
- 90: Verbindungsseil
- 100: Pfeil
- 110: Teilgassackpaket
- 120a, 120b, 120c: Befestigungsschlaufen
- 200: Fensterscheibe
- 210: Dachholm
- 220: obere Fensterkante
- 230: A-Säule
- 240: vordere Seitenkante der Fensterscheibe
- 250: Fensterunterkante
- 300: Pfeil
- 400: Gassack
- 410: Teilgassack
- 420: Teilgassack
- 430: Spannseil
- 440: Gleitschlaufe
- 450a, 450b, 450c: Befestigungsschlaufen
- 455: Faltlinien
- 500: B-Säule
- 510: Dachholm
- 520: A-Säule
- 530: C-Säule
- 540: Gassackmodul
- 550: Gurtumlenkung
- 560: vorderes Seitenfenster
- 570: hinteres Seitenfenster
- 600: hintere Fenstersehne
- 610: vordere Fenstersehne
- 620: offen bleibender Bereich
- 630: offen bleibender Bereich
- 660: Unterkante
- 670: Unterkante
- 800: Gassack
- 810a,810b,810c: Befestigungsschlaufen
- 820: Spannseil
- 830: Teilgassack
- 840: Gleitschlaufe
- 850: Teilgassack
- 855: Gewebesegel
- 860: B-Säule
- 870: Dachholm
- 880: A-Säule
- 890: Befestigungsstelle
- 900: Seitenfenster

## Patentansprüche

1. Gassack für eine Insassenschutzeinrichtung, wobei der Gassack (10) mindestens zwei Teilgassäcke (20, 30) aufweist, die miteinander in Strömungsverbindung stehen, wobei mindestens eine Spanneinrichtung des Gassacks die mindestens zwei Teilgassäcke zueinander zieht und miteinander verspannt, **dadurch gekennzeichnet, dass** die Spanneinrichtung ein Spannseil (50) aufweist, dessen eines Seilende (60) im Verbindungsbereich (40) zwischen den beiden Teilgassäcken (20,30) am Gassack (10) befestigt und dessen anderes Seilende (70) an einem dem Verbindungsbereich (40) abgewandten Ende eines der beiden Teilgassäcke (20) befestigt ist, wobei der andere Teilgassack (30) mittelbar oder unmittelbar mit dem Spannseil (50) in Verbindung steht.

2. Gassack nach Anspruch 1, **dadurch gekennzeichnet, dass** der andere Teilgassack (30) eine Führung (80) aufweist, durch die das Spannseil (50) hindurchgezogen ist.

3. Gassack nach Anspruch 2, **dadurch gekennzeichnet, dass** die Führung durch eine gasdichte Öffnung im anderen Teilgassack (30) gebildet ist.

4. Gassack nach Anspruch 2, **dadurch gekennzeichnet, dass** die Führung durch eine Schlaufe (80) gebildet, die an dem anderen Teilgassack (30) befestigt ist.

5. Gassack nach einem der vorangehenden Ansprüche, **dadurch gekennzeichnet, dass** der Gassack ein Head-Side-Airbag ist.

6. Gassack nach Anspruch 5, **dadurch gekennzeichnet, dass** der eine Teilgassack (20) im Bereich der vorderen oder hinteren Fahrzeugsäule und der andere Teilgassack (30) im Bereich des Dachholms (210) des Kraftfahrzeugs befestigbar ist.

7. Gassack nach Anspruch 6, **dadurch gekennzeichnet, dass** die Teilgassäcke (20,30) derart ausgestaltet sind, dass sich - nach einer Montage im Fahrzeug im aufgeblasenen Zustand - der eine Teilgassack (20) entlang der vorderen oder hinteren Fahrzeugsäule (230) erstrecken kann und sich der andere Teilgassack (30) im wesentlichen senkrecht vom Dachholm (210) nach unten erstrecken kann.

8. Gassack nach einem der vorangehenden Ansprüche, **dadurch gekennzeichnet, dass** der Gassack (10) mindestens drei Teilgassäcke aufweist, vom denen ein erster im Bereich der vorderen Fahrzeugsäule, ein zweiter im Bereich des Dachholms und ein dritter im Bereich der hinteren Fahrzeugsäule befestigbar ist.

9. Gassack nach Anspruch 8, **dadurch gekennzeichnet, dass** zwei Spanneinrichtungen vorhanden sind, von denen eine im vorderen Kraftfahrzeugbereich den ersten und zweiten Teilgassack miteinander verspannt und von denen die zweite den zweiten und dritten Teilgassack miteinander verspannt.

10. Gassack nach einem der vorhergehenden Ansprüche 1 bis 5, **dadurch gekennzeichnet, dass** der Gassack (400) zwei Teilgassäcke (410, 420) aufweist, die durch eine Spanneinrichtung (430, 440) im mittleren Bereich das Gassackes (400) miteinander verspannt werden.

11. Gassack nach Anspruch 10, **dadurch gekennzeichnet, dass** der mittlere Bereich des Gassacks im Bereich einer mittleren Fahrzeugsäule, insbesondere der B-Säule (500), des Kraftfahrzeugs angeordnet werden kann.

12. Gassack nach Anspruch 10 oder 11, **dadurch gekennzeichnet, dass** die Spanneinrichtung im Bereich einer oberen Gurtumlenkung (550) des Kraftfahrzeugs angeordnet werden kannt.

13. Gassack nach einem der vorhergehenden Ansprüche, **dadurch gekennzeichnet, dass** die Spanneinrichtung bzw. die Spanneinrichtungen an Stellen des Gassackes angeordnet sind, an denen kein Schutzpotential bereitgestellt werden muss.

14. Gassack nach einem der vorhergehenden Ansprüche, **dadurch gekennzeichnet, dass** der Gassack (800) im Bereich mindestens einer Spanneinrichtung ein Gewebesegel (855) aufweist.

15. Gassack nach Anspruch 14, **dadurch gekennzeichnet, dass** das Gewebesegel (855) ein durch die zugeordnete Spanneinrichtung (820,840) gebildetes Fenster (255) im Gassackbereich abdeckt.

16. Gassack nach Anspruch 14, **dadurch gekennzeichnet, dass** das Gewebesegel (855) im wesentlichen dreieckförmig ist.

17. Gassack nach Anspruch 14, 15 oder 16, **dadurch gekennzeichnet, dass** jedes Gewebesegel (855) durch eine zugeordnete Spanneinrichtung (830, 840, 890) abspannbar ist.

18. Gassack nach einem der vorhergehenden Ansprüche, **dadurch gekennzeichnet**, der Gassack weitere Gewebesegel aufweist.

19. Gassack nach einem der vorhergehenden Ansprüche, **dadurch gekennzeichnet, dass** der Gassack (800) mindestens ein abstützendes Element an mindestens einer der Fensterunterkanten (660, 670) der Seitenfenster (560,570) des Kraftfahrzeugs aufweist, wobei das abstützende Element im Falle eines Unfalls ein Durchbiegen in den Seitenfensterbereich hinein verhindert.

20. Gassack nach einem der vorhergehenden Ansprüche, **dadurch gekennzeichnet, dass** der Gassack derart ausgestaltet ist, dass die Fenstersehnen (610, 620) der Seitenfenster (560, 570) des Kraftfahrzeugs teilweise offen bleiben.

## Claims

1. Airbag for a passenger protection device, wherein the airbag (10) has at least two partial airbags (20, 30) which are connected to each other in terms of flow, at least one tensioning device of the airbag pulling the at least two partial airbags toward each other and securing them to each other, **characterized in that** the tensioning device has a tensioning cable (50), one cable end (60) of which is fastened to the airbag (10) in the connecting region (40) between the two partial airbags (20, 30) and the other cable end (70) of which is fastened to an end of one of the two partial airbags (20), which end faces away from the connecting region (40), the other partial airbag (30) being indirectly or directly connected to the tensioning cable (50).

2. Airbag according to Claim 1, **characterized in that** the other partial airbag (30) has a guide (80) through which the tensioning cable (50) is pulled.

3. Airbag according to Claim 2, **characterized in that** the guide is formed by a gastight opening in the other partial airbag (30).

4. Airbag according to Claim 2, **characterized in that** the guide is formed by a loop (80) which is fastened to the other partial airbag (30).

5. Airbag according to one of the preceding claims,
**characterized in that** the airbag is a head side airbag.

6. Airbag according to Claim 5, **characterized in that** the one partial airbag (20) can be fastened in the region of the front and rear vehicle pillar and the other partial airbag (30) can be fastened in the region of the roof strut (210) of the motor vehicle.

7. Airbag according to Claim 6, **characterized in that** the partial airbags (20, 30) are designed in such a manner that - after installation in the vehicle, in the inflated state - the one partial airbag (20) can extend along the front or rear vehicle pillar (230) and the other partial airbag. (30) can extend essentially vertically downward from the roof strut (210).

8. Airbag according to one of the preceding claims,
**characterized in that** the airbag (10) has at least three partial airbags, of which a first can be fastened in the region of the front vehicle pillar, a second in the region of the roof strut and a third in the region of the rear vehicle pillar.

9. Airbag according to Claim 8, **characterized in that** there are two tensioning devices, of which one in the front motor vehicle region secures the first and second partial airbags to each other and of which the second secures the second and third partial airbags to each other.

10. Airbag according to one of the preceding Claims 1 to 5, **characterized in that** the airbag (400) has two partial airbags (410, 420) which are secured to each other by a tensioning device (430, 440) in the central region of the airbag (400).

11. Airbag according to Claim 10, **characterized in that** the central region of the airbag can be arranged in the region of a central vehicle pillar, in particular the B-pillar (500), of the motor vehicle.

12. Airbag according to Claim 10 or 11, **characterized in that** the tensioning device can be arranged in the region of an upper belt deflection (550) of the motor vehicle.

13. Airbag according to one of the preceding claims, **characterized in that** the tensioning device or the tensioning devices is/are arranged at points of the airbag at which a protection potential does not have to be provided.

14. Airbag according to one of the preceding claims, **characterized in that** the airbag (800) has a fabric sail (855) in the region of at least one tensioning device.

15. Airbag according to claim 14, **characterized in that** the fabric sail (855) covers a window (255) in the region of the airbag that is formed by the associated tensioning device (820, 840).

16. Airbag according to claim 14, **characterized in that** the fabric sail (855) is essentially triangular.

17. Airbag according to claim 14, 15 or 16, **characterized in that** each fabric sail (855) can be anchored by an associated tensioning device (830, 840, 890).

18. Airbag according to one of the preceding claims, **characterized in that** the airbag has further fabric sails.

19. Airbag according to one of the preceding claims, **characterized in that** the airbag (800) has at least one supporting element on at least one of the window lower edges (660, 670) of the side windows (560, 570) of the motor vehicle, the supporting element preventing the airbag from being deflected into the side window region in the event of an accident.

20. Airbag according to one of the preceding claims, **characterized in that** the airbag is designed such that the window cords (610, 620) of the side windows (560, 570) of the motor vehicle remain partially open.

## Revendications

1. Poche de gaz pour un dispositif de protection des occupants d'un véhicule, dans lequel la poche de gaz (10) présente au moins deux poches de gaz partielles (20, 30), qui sont en relation d'écoulement l'une avec l'autre, sachant qu'au moins un dispositif de tension de la poche de gaz tire l'une vers l'autre au moins les deux poches de gaz partielles et les tend ensemble, **caractérisée en ce que** le dispositif de tension présente une corde de tension (50), dont l'une des extrémités (60) est fixée sur la poche de gaz (10) dans la zone de liaison (40) entre les deux poches de gaz partielles (20, 30) et dont l'autre extrémité de corde (70) est fixée à une extrémité opposée à la zone de liaison (40) d'une des deux poches partielles de gaz (20), sachant que l'autre poche partielle de gaz (30) est en liaison directe ou indirecte avec la corde de tension (50).

2. Poche de gaz selon la revendication 1, **caractérisée en ce que** l'autre poche de gaz partielle (30) présente un guidage (80), grâce auquel la corde de tension (50) est tirée.

3. Poche de gaz selon la revendication 2, **caractérisée en ce que** le guidage est formé par une ouverture étanche au gaz située dans l'autre poche partielle de gaz (30).

4. Poche de gaz selon la revendication 2, **caractérisée en ce que** le guidage est constitué par un passant de ceinture (80), qui est fixé sur l'autre poche partielle de gaz (30).

5. Poche de gaz selon l'une des revendications précédentes, **caractérisée en ce que** la poche de gaz est un airbag de tête latéral.

6. Poche de gaz selon la revendication 5, **caractérisé en ce que** l'une des poches de gaz partielles (20) peut être fixée dans la zone de la colonne de véhicule avant ou arrière et que l'autre poche de gaz partielle (30) peut être fixée dans la zone de longeron de toit (210) du véhicule.

7. Poche de gaz selon la revendication 6, **caractérisée en ce que** les poches de gaz partielles (20, 30) sont conçues de manière à ce que l'une des poches de gaz partielles (20) - après un montage dans le véhicule à l'état gonflé - puisse s'étendre le long de la colonne de véhicule avant ou arrière (230) et que l'autre poche de gaz partielle (30) puisse s'étendre essentiellement perpendiculairement au longeron de toit (210) vers le bas.

8. Poche de gaz selon l'une des revendications précédentes, **caractérisée en ce que** la poche de gaz (10) présente au moins trois poches de gaz partielles dont l'une peut être fixée dans la zone de la colonne avant du véhicule, une deuxième dans la zone du longeron de toit et une troisième dans la zone de la colonne arrière de véhicule.

9. Poche de gaz selon la revendication 8, **caractérisée en ce qu'**elle comporte deux dispositifs de tension, dont l'un tend, dans la zone avant du véhicule, la première et la deuxième poches de gaz partielles ensemble, et dont le second tend la première et la troisième poches de gaz partielles ensemble.

10. Poche de gaz selon l'une des revendications précédentes 1 à 5, **caractérisée en ce que** la poche de gaz (400) présente deux poches de gaz partielles (410, 420), qui sont tendues ensemble dans la zone médiane de la poche de gaz (400) par un dispositif de tension (430, 440).

11. Poche de gaz selon la revendication 10, **caractérisée en ce que** la zone médiane de la poche de gaz peut être disposée dans la zone d'une colonne médiane de véhicule, en particulier la colonne (500) du véhicule.

12. Poche de gaz selon la revendication 10 ou 11, **caractérisée en ce que** le dispositif de tension peut être disposé dans la zone d'une déviation supérieure de la ceinture (550) du véhicule.

13. Poche de gaz selon l'une des revendications précédentes, **caractérisé en ce que** le dispositif de tension ou les dispositifs de tension sont disposés à des endroits de la poche de gaz, auxquels aucun potentiel de protection ne doit être mis à disposition.

14. Poche de gaz selon l'une des revendications précédentes, **caractérisée en ce que** la poche de gaz (800) présente dans la zone d'au moins un dispositif de tension une voile tissée (855).

15. Poche de gaz selon la revendication 14, **caractérisée en ce que** la voile tissée (855) recouvre une fenêtre (255) constituée par le dispositif de tension affecté (820, 840) dans la zone de la poche de gaz.

16. Poche de gaz selon la revendication 14, **caractérisée en ce que** la voile tissée (855) est essentiellement de forme triangulaire.

17. Poche de gaz selon la revendication 14, 15 ou 16, **caractérisée en ce que** chaque voile tissée (855) peut être détendue par un dispositif de tension affecté (830, 840, 890).

18. Poche de gaz selon l'une des revendications précédentes, **caractérisée en ce que** la poche de gaz présente d'autres voiles tissées.

19. Poche de gaz selon l'une des revendications précédentes, **caractérisée en ce que** la poche de gaz (800) présente au moins un élément de support à au moins une arête inférieure de fenêtre (660, 670) des fenêtres latérales (560, 570) du véhicule, sachant que l'élément de support empêche en cas d'accident une torsion vers l'intérieur de la zone des fenêtres latérales.

20. Poche de gaz selon l'une des revendications précédentes, **caractérisée en ce que** la poche de gaz est conçue de façon à ce que les cordeaux de fenêtres (610, 620) des fenêtres latérales (560, 570) du véhicule restent partiellement ouverts.
